# EUROPEAN PATENT APPLICATION

(11) **EP 4 664 963 A1**
(43) Date of publication of application: **17.12.2025**
(21) Application number: 23921168.3
(22) Date of filing: 09.02.2023
(51) Int. Cl.: H04W 16/26, H04W 8/26, H04W 84/00

(54) **WIRELESS BASE STATION, WIRELESS RELAY DEVICE, MOBILE OBJECT, WIRELESS COMMUNICATION SYSTEM, WIRELESS COMMUNICATION METHOD, AND PROGRAM**

(71) Applicant: HONDA MOTOR CO., LTD., Tokyo 105-8404 (JP)
(72) Inventor: OTAKA Masaru, Tokyo 107-8556 (JP)
(74) Representative: Weickmann & Weickmann PartmbB
(86) International application number: PCT/JP2023/004468
(87) International publication number: WO 2024/166337

(57) **Abstract**

A wireless base station, which wirelessly communicates with at least one wireless relay apparatus, includes: a storage unit which stores a piece of area identification information for identifying a predetermined cell area at least a part of which is provided by at least one wireless base station including the wireless base station; a control unit which decides a piece of cell identification information for identifying a cell formed by the wireless relay apparatus in the cell area; and a communication unit which transmits, to the wireless relay apparatus, the piece of area identification information and the piece of cell identification information that is decided by the control unit.

## Description

### BACKGROUND

### 1. TECHNICAL FIELD

The present invention relates to a wireless base station, a wireless relay apparatus, a moving body, a wireless communication system, a wireless communication method, and a program.

### 2. RELATED ART

Patent Documents 1 to 6 describe technologies related to mobile communication.

### Related Art Documents

### Patent Documents

Patent Document 1: Japanese Patent Application Publication No. 2019-121903
Patent Document 2: Japanese Patent No. 5556954
Patent Document 3: Japanese Patent No. 6586515
Patent Document 4: Japanese Patent Application Publication No. 2011-193375
Patent Document 5: Japanese Patent Application Publication No. 2019-106738
Patent Document 6: Japanese Patent No. 6195312

### TECHNICAL PROBLEM

In mobile communication performed by a moving body, there is an issue that wireless communication can be no longer maintained when pieces of identification information of cells formed by nearby moving bodies are the same. The present application aims to improve stability of communication in the moving body by solving the issue described above. And thus, it can further improve traffic safety when the moving body is a traffic participant and contribute to development of a sustainable transportation system.

### GENERAL DISCLOSURE

A first aspect of the present invention provides a wireless base station. The wireless base station wirelessly communicates with at least one wireless relay apparatus. The wireless base station includes a storage unit which stores a piece of area identification information for identifying a cell area including a cell formed by at least either: one or more wireless base stations including the wireless base station; or one or more wireless relay apparatuses including the wireless relay apparatus. The wireless base station includes a control unit which decides a piece of cell identification information for identifying a cell formed by the wireless relay apparatus in the cell area. The wireless base station includes a communication unit which transmits, to the wireless relay apparatus, the piece of area identification information and the piece of cell identification information that is decided by the control unit.

In the wireless base station described above, the control unit may decide the piece of cell identification information such that the piece of cell identification information transmitted to each of a plurality of wireless relay apparatuses that are close to each other in the cell area, does not coincide.

In any wireless base station described above, the control unit may decide the piece of cell identification information such that the piece of cell identification information transmitted to each of a plurality of wireless relay apparatuses in the cell area, does not coincide.

In any wireless base station described above, when the cell area includes cell areas of a plurality of wireless base stations including the wireless base station, the communication unit may transmit the piece of cell identification information decided by the control unit to another wireless base station included in the plurality of wireless base stations.

In any wireless base station described above, the communication unit may transmit the piece of area identification information being included in a piece of report information.

In any wireless base station described above, the communication unit may receive, from the wireless relay apparatus, a piece of area identification information transmitted to the wireless relay apparatus. When a piece of area identification information received by the communication unit from the wireless relay apparatus is different from a piece of area identification information for identifying the cell area, the control unit may decide the piece of cell identification information, and the communication unit may transmit the piece of cell identification information to the wireless relay apparatus.

In any wireless base station described above, the communication unit may receive, from the wireless relay apparatus, a piece of cell identification information assignment information indicating whether or not a piece of cell identification information is assigned to the wireless relay apparatus. When the control unit determines, based on the piece of cell identification information assignment information, that a piece of cell identification information is not assigned to the wireless relay apparatus, the control unit may decide the piece of cell identification information, and the communication unit may transmit, to the wireless relay apparatus, the piece of cell identification information decided by the control unit.

A second aspect of the present invention provides a wireless communication system. The wireless communication system includes: any wireless base station described above; and the wireless relay apparatus.

A third aspect of the present invention provides a program. The program causes a computer to function as any wireless base station described above.

A fourth aspect of the present invention provides a wireless relay apparatus. The wireless relay apparatus relays communication between a wireless base station and a terminal apparatus. The wireless relay apparatus includes a communication unit which receives, from the wireless base station, a piece of area identification information for identifying a cell area including a cell formed by at least either: one or more wireless base stations including the wireless base station; or one or more wireless relay apparatuses including the wireless relay apparatus, and a piece of cell identification information for identifying a cell formed by the wireless relay apparatus in the cell area. The wireless relay apparatus includes a storage unit which stores the piece of area identification information and the piece of cell identification information that are received by the communication unit. The communication unit wirelessly communicates with the terminal apparatus by using the piece of cell identification information stored in the storage unit.

In the wireless relay apparatus described above, the communication unit may receive the piece of area identification information through a piece of report information.

In any wireless relay apparatus described above, the communication unit may transmit, to the wireless base station, the piece of area identification information stored in the storage unit, and when the piece of area identification information stored in the storage unit is different from the piece of area identification information for identifying the cell area, receive the piece of cell identification information from the wireless relay apparatus.

In any wireless relay apparatus described above, the communication unit may transmit, to the wireless base station, a piece of cell identification information assignment information indicating whether or not a piece of cell identification information is stored in the storage unit, and when a piece of cell identification information is not stored in the storage unit, receive the piece of cell identification information from the wireless base station.

A fifth aspect of the present invention provides a moving body. The moving body includes any wireless relay apparatus described above.

A sixth aspect of the present invention provides a wireless communication system. The wireless communication system includes: any wireless relay apparatus described above; and the wireless base station.

A seventh aspect of the present invention provides a program. The program causes a computer to function as any wireless relay apparatus described above.

An eighth aspect of the present invention provides a wireless communication method. The wireless communication method is executed in a wireless base station which wirelessly communicates with at least one wireless relay apparatus. The wireless communication method includes storing a piece of area identification information for identifying a cell area including a cell formed by at least either: one or more wireless base stations including the wireless base station; or one or more wireless relay apparatuses including the wireless relay apparatus. The wireless communication method includes deciding a piece of cell identification information for identifying a cell formed by the wireless relay apparatus in the cell area. The wireless communication method includes transmitting, to the wireless relay apparatus, the piece of area identification information and the piece of cell identification information that is decided in the deciding.

A ninth aspect of the present invention provides a wireless communication method. The wireless communication method is executed in a wireless relay apparatus which relays communication between a wireless base station and a terminal apparatus. The wireless communication method includes receiving, from the wireless base station, a piece of area identification information for identifying a cell area including a cell formed by at least either: one or more wireless base stations including the wireless base station; or one or more wireless relay apparatuses including the wireless relay apparatus, and a piece of cell identification information for identifying a cell formed by the wireless relay apparatus in the cell area. The wireless communication method includes storing the piece of area identification information and the piece of cell identification information that are received from the wireless base station. The wireless communication method includes wirelessly communicating with the terminal apparatus by using the piece of cell identification information stored in the storing.

The summary clause does not necessarily describe all necessary features of the embodiments of the present invention. The present invention may also be a sub-combination of the features described above.

### BRIEF DESCRIPTION OF THE DRAWINGS

FIG. 1 schematically shows a configuration of a wireless communication system 5 according to one embodiment.
FIG. 2 shows one example of a system configuration of a wireless relay apparatus 110.
FIG. 3 shows one example of a system configuration of a wireless base station 120.
FIG. 4 shows one example of a sequence according to a wireless communication method executed in the wireless communication system 5.
FIG. 5 shows one example of the sequence according to the wireless communication method executed in the wireless communication system 5.
FIG. 6 shows one example of the sequence according to the wireless communication method executed in the wireless communication system 5.
FIG. 7 shows an example of a computer 2000 in which a plurality of embodiments of the present invention can be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

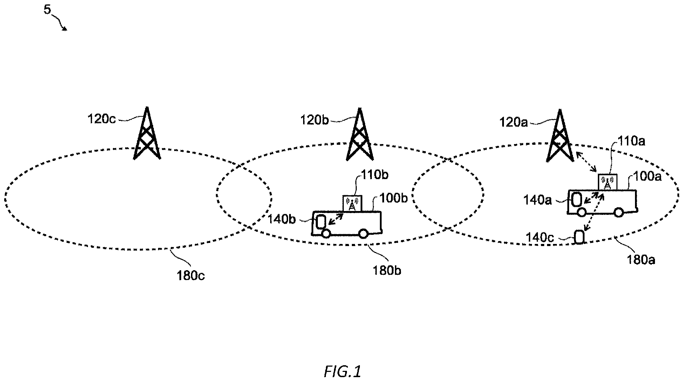

FIG. 1 schematically shows a configuration of a wireless communication system 5 according to one embodiment. The wireless communication system 5 includes: a wireless base station 120a, a wireless base station 120b, and a wireless base station 120c; a wireless relay apparatus 110a and a wireless relay apparatus 110b; a moving body 100a and a moving body 100b; and a terminal apparatus 140a, a terminal apparatus 140b, and a terminal apparatus 140c.

In the present embodiment, the wireless base station 120a, the wireless base station 120b, and the wireless base station 120c may be collectively referred to as "wireless base station(s) 120" with suffixes of their reference numerals omitted. Similarly, the wireless relay apparatus 110a and the wireless relay apparatus 110b may be collectively referred to as "wireless relay apparatus(es) 110" with suffixes of their reference numerals omitted. Similarly, the moving body 100a and the moving body 100b may be collectively referred to as "moving body 100" with suffixes of their reference numerals omitted. Similarly, the terminal apparatus 140a, the terminal apparatus 140b, and the terminal apparatus 140c may be collectively referred to as "terminal apparatus 140" with suffixes of their reference numerals omitted.

The wireless base station 120 is a mobile communication base station which supports at least one mobile communication scheme. Similarly, the wireless relay apparatus 110 and the terminal apparatus 140 are wireless communication apparatuses which support at least one mobile communication scheme. In the present embodiment, a mobile communication scheme supported by the wireless base station 120, the wireless relay apparatus 110, and the terminal apparatus 140 may be, for example, a mobile scheme communication used in a mobile communication system such as a fourth-generation mobile communication system (4G) or a fifth-generation mobile communication system (5G).

The wireless base station 120 is a base station fixed at a specific location. Each of the wireless base stations 120 forms a cell, and by forming the cell, wirelessly communicates with the wireless relay apparatus 110 and the terminal apparatus 140. For example, a cell 180a is a cell formed by the wireless base station 120a, a cell 180b is a cell formed by the wireless base station 120b, and a cell 180c is a cell formed by the wireless base station 120c. In the present embodiment, the cell 180a, the cell 180b, and the cell 180c may be collectively referred to as "cell 180" with suffixes of their reference numerals omitted.

The wireless relay apparatus 110 has a function for providing service to the terminal apparatus 140 as a wireless base station, and has a function for receiving service from the wireless base station 120 as a terminal apparatus. The wireless relay apparatus 110 relays communication between the terminal apparatus 140 and the wireless base station 120. The terminal apparatus 140 can access a core network via the wireless base station 120. Even if the terminal apparatus 140 cannot directly wirelessly communicate with the wireless base station 120, it may be able to access the core network via the wireless relay apparatus 110 and the wireless base station 120.

The moving body 100 is movable equipment. The moving body 100 is, for example, a vehicle such as a train, a car such as a bus. The vehicle is one example of transportation equipment. A moving body may be various kinds of aircrafts including an unmanned aircraft, an artificial satellite, a marine vessel, or the like. The moving body 100a includes the wireless relay apparatus 110a. The moving body 100b includes the wireless relay apparatus 110b. Therefore, the wireless relay apparatus 110a can move together with the moving body 100a, and the wireless relay apparatus 110b can move together with the moving body 100b.

Therefore, when the moving body 100a is located in the cell 180a of the wireless base station 120a, the wireless relay apparatus 110a relays communication between the terminal apparatus 140a carried by a user riding on the moving body 100a and the wireless base station 120a. Furthermore, the wireless relay apparatus 110a relays communication between the terminal apparatus 140c located near the wireless relay apparatus 110a and the wireless base station 120a. When the moving body 100b is located in the cell 180b of the wireless base station 120b, the wireless relay apparatus 110b relays communication between the terminal apparatus 140b carried by a user riding on the moving body 100b and the wireless base station 120b.

In the wireless communication system 5 of the present embodiment, the wireless base station 120 assigns a specific piece of cell identification information to a cell formed by the wireless relay apparatus 110 in a specific cell area including the cell 180 formed by at least one specific wireless base station 120. This allows the cell formed by the wireless relay apparatus 110 in the specific cell area to be identified through the specific piece of cell identification information.

For example, when a cell area for the wireless relay apparatus 110 is provided by the cell 180a formed by the wireless base station 120a and the cell 180b formed by the wireless base station 120b, the wireless base station 120 assigns pieces of cell identification information to the wireless relay apparatus 110a and the wireless relay apparatus 110b such that a piece of cell identification information of a cell formed by the wireless relay apparatus 110a located in said cell area does not coincide with a piece of cell identification information of a cell formed by the wireless relay apparatus 110b. This allows wireless communication via the wireless relay apparatus 110 to be maintained even if the moving body 100a and the moving body 100b move in the cell area.

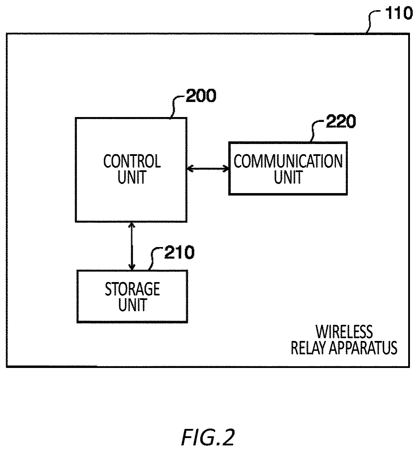

FIG. 2 shows one example of a system configuration of the wireless relay apparatus 110. The wireless relay apparatus 110 relays communication between the wireless base station 120 and the terminal apparatus 140. The wireless relay apparatus 110 includes a control unit 200, a storage unit 210, and a communication unit 220.

The control unit 200 controls the wireless relay apparatus 110 entirely. The communication unit 220 is responsible for wireless communication between the wireless base station 120 and the terminal apparatus 140. The control unit 200 is realized by an arithmetic processing unit including a processor. The storage unit 210 is realized including a non-volatile storage medium. The control unit 200 performs processing by using information stored in the storage unit 210. The control unit 200 may be realized by a microcomputer including a CPU, a ROM, a RAM, an I/O, a bus, and the like. The wireless relay apparatus 110 may be realized by a computer. The wireless relay apparatus 110 may be realized by a single computer. The wireless relay apparatus 110 may be realized by a plurality of computers. A function of the wireless relay apparatus 110 may be realized by a virtual system realized using a virtualization technology.

The communication unit 220 receives, from the wireless base station 120, a piece of area identification information for identifying a cell area including a cell formed by at least either: one or more wireless base stations 120; or one or more wireless relay apparatuses 110 including its own wireless relay apparatus 110, and a piece of cell identification information for identifying the cell formed by the wireless relay apparatus 110 in the cell area. The storage unit 210 stores the piece of area identification information and the piece of cell identification information that are received by the communication unit 220. The communication unit 220 wirelessly communicates with the terminal apparatus 140 by using the piece of cell identification information stored in the storage unit 210. For example, the communication unit 220 transmits a cell-specific signal to the terminal apparatus 140 by using the piece of cell identification information stored in the storage unit 210. The piece of cell identification information may be, for example, a cell global identifier (CGI).

The communication unit 220 may receive the piece of area identification information through a piece of report information. The piece of report information is, for example, a piece of system information. The piece of system information is, for example, a system information block (SIB).

The communication unit 220 transmits, to the wireless base station 120, the piece of area identification information stored in the storage unit 210. When the piece of area identification information stored in the storage unit 210 is different from the piece of area identification information for identifying the cell area, the communication unit 220 receives the piece of cell identification information from the wireless relay apparatus 110. As a result, when the wireless relay apparatus 110 moves from one cell area into another cell area as the moving body 100 moves, it is possible to obtain a piece of area identification information of the another cell area.

The communication unit 220 transmits, to the wireless base station 120, a piece of cell identification information assignment information indicating whether or not a piece of cell identification information is stored in the storage unit 210. When a piece of cell identification information is not stored in the storage unit 210, the communication unit 220 receives the piece of cell identification information from the wireless base station 120.

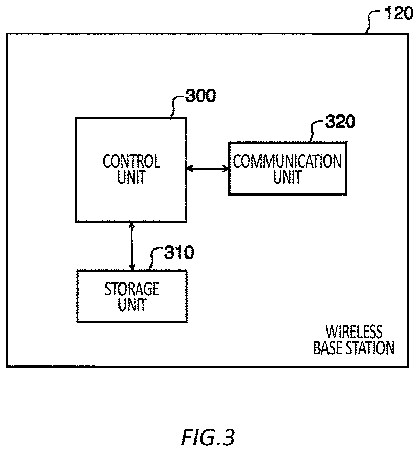

FIG. 3 shows one example of a system configuration of the wireless base station 120. The wireless base station 120 wirelessly communicates with at least one wireless relay apparatus 110**.** The wireless base station 120 includes a control unit 300, a storage unit 310, and a communication unit 320.

The control unit 300 controls the wireless base station 120 entirely. The communication unit 320 is responsible for wireless communication between the wireless relay apparatus 110 and the terminal apparatus 140. The control unit 300 is realized by an arithmetic processing unit including a processor. The storage unit 310 is realized including a non-volatile storage medium. The control unit 300 performs processing by using information stored in the storage unit 310. The control unit 300 may be realized by a microcomputer including a CPU, a ROM, a RAM, an I/O, a bus, and the like. The wireless base station 120 may be realized by a computer. The wireless base station 120 may be realized by a single computer. The wireless base station 120 may be realized by a plurality of computers. A function of the wireless base station 120 may be realized by a virtual system realized using a virtualization technology.

The storage unit 310 stores a piece of area identification information for identifying a cell area including a cell formed by at least either: one or more wireless base stations 120 including its own wireless base station 120; or one or more wireless relay apparatuses 110**.** The control unit 300 decides a piece of cell identification information for identifying the cell formed by the wireless relay apparatus 110 in the cell area. The communication unit 320 transmits, to the wireless relay apparatus 110**,** the piece of area identification information and the piece of cell identification information that is decided by the control unit 300.

The control unit 300 decides the piece of cell identification information such that pieces of cell identification information respectively transmitted to a plurality of wireless relay apparatuses 110 in the cell area, do not coincide with each other. The control unit 300 may decide the piece of cell identification information such that pieces of cell identification information respectively transmitted to a plurality of wireless relay apparatuses 110 that are close to each other in the cell area, do not coincide with each other. When a movement route of the moving body 100 provided with the wireless relay apparatus 110 is predetermined, and it is determined that the moving body 100 provided with the wireless relay apparatus 110 is not in close proximity, the control unit 300 may decide that at least some of the pieces of cell identification information respectively transmitted to those plurality of wireless relay apparatuses 110 are to have a same value.

When the cell area includes cell areas of a plurality of wireless base stations 120 including the wireless base station 120, the communication unit 320 transmits the piece of cell identification information decided by the control unit 300 to another wireless base station 120 included in the plurality of wireless base stations 120. This allows pieces of cell identification information to be synchronized among the plurality of wireless base stations 120.

The communication unit 320 may transmit the piece of area identification information being included in a piece of report information. The piece of report information is, for example, a piece of system information. The piece of system information is, for example, a system information block (SIB).

The communication unit 320 receives, from the wireless relay apparatus 110, the piece of area identification information transmitted to the wireless relay apparatus 110. When the piece of area identification information received by the communication unit 320 from the wireless relay apparatus 110 is different from the piece of area identification information for identifying the cell area, the control unit 300 decides the piece of cell identification information, and the communication unit 320 transmits the piece of cell identification information to the wireless relay apparatus 110. As a result, when the wireless relay apparatus 110 moves from another cell area into a cell area including a cell of the wireless base station 120 as the moving body 100 moves, the piece of area identification information of the cell area including the cell of the wireless base station 120 can be transmitted to the wireless relay apparatus 110**.**

The communication unit 320 receives, from the wireless relay apparatus 110**,** a piece of cell identification information assignment information indicating whether or not a piece of cell identification information is assigned to the wireless relay apparatus 110. When the control unit 300 determines, based on the piece of cell identification information assignment information, that a piece of cell identification information is not assigned to the wireless relay apparatus 110, the control unit 300 may decide the piece of cell identification information, and the communication unit 320 may transmit, to the wireless relay apparatus 110, the piece of cell identification information decided by the control unit 300.

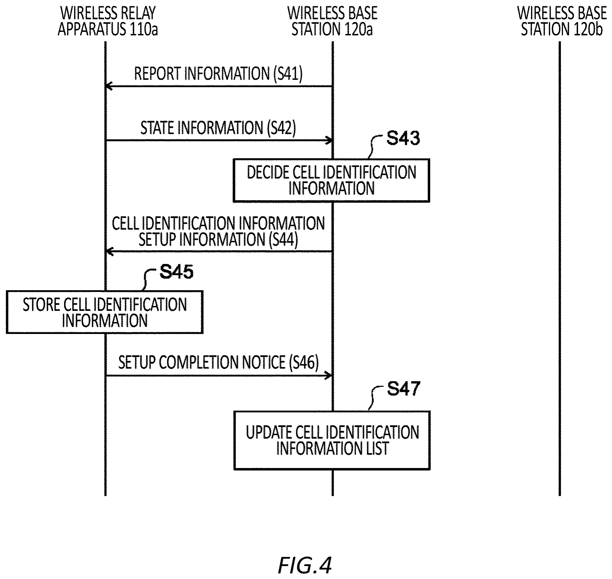

FIG. 4 shows one example of a sequence according to a wireless communication method executed in the wireless communication system 5. Here, one example of the sequence is shown for a case where a cell area is a cell formed by the wireless base station 120a and the moving body 100a enters said cell area to make a call. It is assumed that the wireless relay apparatus 110a included in the moving body 100a is not assigned a piece of cell identification information.

The communication unit 220 of the wireless relay apparatus 110a receives a piece of report information transmitted from the wireless base station 120a in S41. The piece of report information may include, for example, a piece of area identification information for identifying the cell area, and a piece of PLMN information for identifying a PLMN of the wireless base station 120a.

The communication unit 220 of the wireless relay apparatus 110a transmits a piece of state information of a piece of cell identification information in S42. The piece of state information may include, for example, a piece of classification information of the wireless relay apparatus 110a, the piece of area identification information, the piece of cell identification information, and a piece of PLMN information for identifying a PLMN used by the wireless relay apparatus 110a among pieces of PLMN information received in S41.

The piece of classification information is information indicating whether or not the wireless relay apparatus 110a is a movable relay apparatus. The piece of classification information is, for example, "Vehicle". "Vehicle" indicates that the wireless relay apparatus 110a is a movable relay apparatus. The piece of area identification information received in S41 is set as the piece of area identification information included in the piece of state information. The piece of cell identification information stored in the storage unit 210 of the wireless relay apparatus 110a is set as the piece of cell identification information included in the piece of state information. Here, since the wireless relay apparatus 110a is not assigned a piece of cell identification information, a predetermined value indicating that a piece of cell identification information has not been assigned (for example, 0xFF) is set as the piece of cell identification information of the piece of state information. The piece of state information is one example of a piece of cell identification information assignment information.

When the communication unit 320 of the wireless base station 120a receives the piece of state information, in S43, the control unit 300 determines, based on the piece of classification information included in the piece of state information, that the wireless relay apparatus 110a is a movable relay apparatus, and determines, based on the piece of cell identification information included in the piece of state information, that a piece of cell identification information has not been assigned to the wireless relay apparatus 110a. In this case, the control unit 300 decides the piece of cell identification information to be used by the wireless relay apparatus 110a. For example, the storage unit 310 of the wireless base station 120a stores a cell identification information list indicating: all of a plurality of pieces of cell identification information that can be assigned to the wireless relay apparatus 110 in the cell area; and a piece of cell identification information that has been currently assigned to the wireless relay apparatus 110 in the cell area. The control unit 300 decides one piece of cell identification information to be assigned to the wireless relay apparatus 110a, from among pieces of cell identification information that are not assigned to the wireless relay apparatus 110, of all the pieces of cell identification information that can be assigned to the wireless relay apparatus 110.

In S44, the communication unit 320 of the wireless base station 120a transmits a piece of cell identification information setup information to the wireless relay apparatus 110a. The piece of cell identification information setup information includes the piece of area identification information for identifying the cell area, the piece of cell identification information, and the piece of PLMN information. The piece of cell identification information decided in S43 is set as the piece of cell identification information. The piece of PLMN information included in the piece of state information in S42 is set as the piece of PLMN information.

When the communication unit 220 of the wireless relay apparatus 110a receives the piece of cell identification information setup information, in S45, the control unit 200 stores, in the storage unit 210, the piece of cell identification information included in the piece of cell identification information setup information, as the piece of cell identification information assigned to the wireless relay apparatus 110a. Subsequently, in S46, the communication unit 220 transmits, to the wireless base station 120a, a setup completion notice indicating that a setup of the piece of cell identification information has been completed.

When the communication unit 320 of the wireless base station 120a receives the setup completion notice, in S47, the control unit 300 updates the cell identification information list stored in the storage unit 310. Specifically, the control unit 300 updates the cell identification information list by setting, in the cell identification information list, the piece of cell identification information assigned to the wireless relay apparatus 110a as an assigned piece of cell identification information.

As one example, the piece of report information, the piece of state information, the piece of cell identification information setup information, and the setup completion notice may be respectively an SIB, an RRC_Connection_Request message, an RRC_Connection_Setup message, an RRC _Connection_Setup_Complete message. The piece of cell identification information setup information may be an RRC_Connection_Reconfiguration message. The piece of report information, the piece of state information, the piece of cell identification information setup information, and the setup completion notice may be respectively an SIB, an RRC_Setup_Request message, an RRC_Setup message, and an RRC_Setup_Complete message.

In this manner, the communication unit 320 receives, from the wireless relay apparatus 110, a piece of cell identification information assignment information indicating whether or not a piece of cell identification information is assigned to the wireless relay apparatus 110. When the control unit 300 determines, based on the piece of cell identification information assignment information, that a piece of cell identification information is not assigned to the wireless relay apparatus 110, the control unit 300 may decide the piece of cell identification information, and the communication unit 320 may transmit, to the wireless relay apparatus 110, the piece of cell identification information decided by the control unit 300. Therefore, when a piece of cell identification information is not stored in the storage unit 210, the communication unit 220 of the wireless relay apparatus 110 can receive the piece of cell identification information from the wireless base station 120. As a result, for example when the wireless relay apparatus 110 enters the cell area and performs location registration, it is possible to receive and store the piece of cell identification information of the wireless relay apparatus 110 in the cell area.

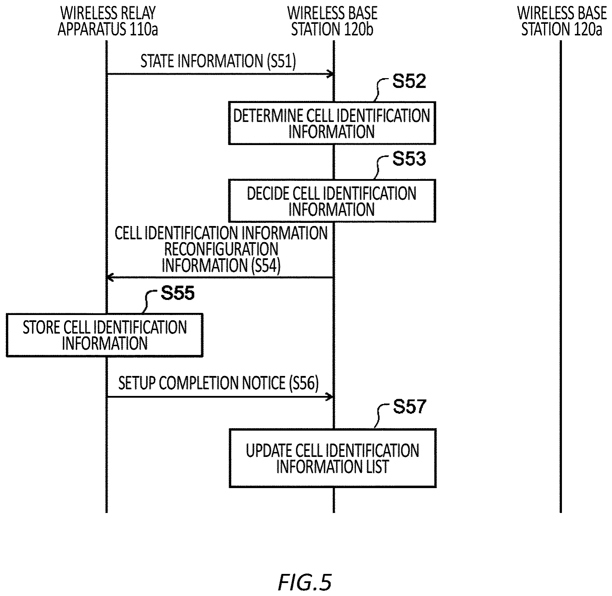

FIG. 5 shows one example of the sequence according to the wireless communication method executed in the wireless communication system 5. Here, one example of the sequence is shown for a case where the wireless relay apparatus 110a which was located in a cell area of the wireless base station 120a enters a cell area of the wireless base station 120b as the moving body 100a moves. The wireless relay apparatus 110a included in the moving body 100a is assigned a piece of cell identification information of the cell area of the wireless base station 120a.

In S51, the communication unit 220 of the wireless relay apparatus 110a transmits a piece of state information. The piece of state information includes a piece of classification information, a piece of area identification information, and a piece of cell identification information. Here, a piece of area identification information of the wireless base station 120a is set as the piece of area identification information, and a piece of cell identification information notified from the wireless base station 120a is set as the piece of cell identification information.

When the communication unit 320 of the wireless base station 120b receives the piece of state information, in S52, the control unit 300 of the wireless base station 120b determines the piece of cell identification information and the piece of area identification information included in the piece of state information. Specifically, when the piece of area identification information included in the piece of state information does not coincide with a piece of area identification information for identifying the cell area provided by a cell of the wireless base station 120b, if the piece of cell identification information included in the piece of state information is assigned to another wireless relay apparatus 110 in the cell area of 120b, the control unit 300 determines to assign a piece of cell identification information to the wireless relay apparatus 110a.

In S53, the control unit 300 of the wireless base station 120b decides the piece of cell identification information to be used by the wireless relay apparatus 110a. Since processing of S53 is similar to that of S43, description thereof will be omitted.

In S54, the communication unit 320 transmits a piece of cell identification information reconfiguration information to the wireless relay apparatus 110a. The piece of cell identification information reconfiguration information includes the piece of area identification information of the cell area of the wireless base station 120b, and the piece of cell identification information decided in S53.

When the communication unit 220 of the wireless relay apparatus 110a receives the piece of cell identification information reconfiguration information, in S55, the control unit 200 stores, in the storage unit 210, the piece of cell identification information included in the piece of cell identification information reconfiguration information, as the piece of cell identification information assigned to the wireless relay apparatus 110a. Subsequently, in S56, the communication unit 320 transmits, to the wireless base station 120b, a setup completion notice indicating that a setup of the piece of cell identification information has been completed.

When the communication unit 320 of the wireless base station 120b receives the setup completion notice, in S57, the control unit 300 updates the cell identification information list stored in the storage unit 310. Specifically, the control unit 300 updates the cell identification information list by setting, in the cell identification information list, the piece of cell identification information assigned to the wireless relay apparatus 110a as an assigned piece of cell identification information.

As one example, the piece of state information, the piece of cell identification information reconfiguration information, and the setup completion notice may be respectively a UL_information_transfer message, an RRC_Connection_Reconfiguration message, an
RRC_Connection_Reconfiguration_Complete message. The piece of cell identification information setup information may be an RRC_Connection_Reconfiguration message. The piece of report information, the piece of state information, the piece of cell identification information setup information, and the setup completion notice may be respectively an SIB, an RRC_Setup_Request message, an RRC_Setup message, and an RRC_Setup_Complete message.

In this manner, in the wireless relay apparatus 110b, when the communication unit 320 receives, from the wireless relay apparatus 110a, the piece of area identification information assigned to the wireless relay apparatus 110a, if it determines that said piece of area identification information is different from the piece of area identification information for identifying the cell area of the wireless relay apparatus 110b, the control unit 300 decides the piece of cell identification information, and the communication unit 320 transmits the piece of cell identification information to the wireless relay apparatus 110a. As a result, when the wireless relay apparatus 110a moves from another cell area into a cell area including a cell of the wireless base station 120b as the moving body 100 moves, the piece of area identification information of the cell area including the cell of the wireless base station 120b can be transmitted to the wireless relay apparatus 110a. This allows the communication unit 220 of the wireless relay apparatus 110a to receive the piece of cell identification information from the wireless relay apparatus 110. As a result, when the wireless relay apparatus 110 moves from one cell area into another cell area as the moving body 100 moves, it is possible to obtain a correct piece of area identification information managed in the another cell area.

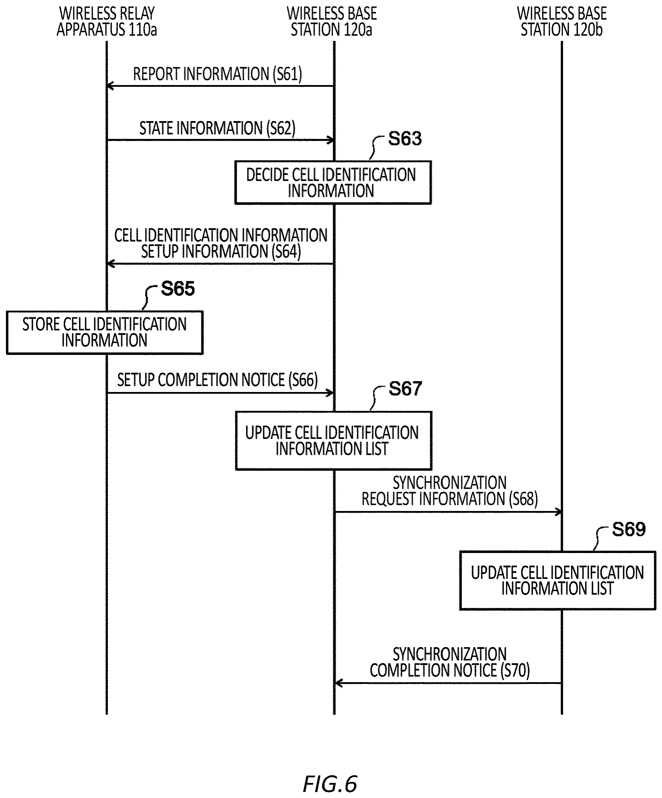

FIG. 6 shows one example of the sequence according to the wireless communication method executed in the wireless communication system 5. In a case of FIG. 6, a cell area is defined by cells respectively formed by the wireless base station 120a and the wireless base station 120b. Except for this, as in a case of FIG. 4, one example of the sequence is shown for a case where the moving body 100a enters the cell area in a state where the wireless relay apparatus 110a is not assigned a piece of cell identification information.

Since processing of S61 to S67 is the same as processing of S41 to S47 in FIG. 4, description thereof will be omitted. When receiving a setup completion notice in S68, in S67, the communication unit 320 of the wireless base station 120a transmits a piece of synchronization request information to the wireless base station 120b. The piece of synchronization request information includes a piece of area identification information of the cell area, and a piece of cell identification information assigned to the wireless relay apparatus 110a.

When the communication unit 320 of the wireless base station 120b receives the piece of synchronization request information, in S69, the control unit 300 of the wireless base station 120b updates a cell identification information list stored in the storage unit 310. Specifically, the control unit 300 updates the cell identification information list by setting, in the cell identification information list, the piece of cell identification information assigned by the wireless base station 120a to the wireless relay apparatus 110a as an assigned piece of cell identification information.

Subsequently, in S70, the communication unit 320 of the wireless base station 120b transmits a synchronization completion notice to the wireless base station 120a. It should be noted that the piece of synchronization request information and the synchronization completion notice may be a connection-type inter-apparatus synchronization message and inter-apparatus synchronization message response. In another aspect, the piece of synchronization request information may be transmitted in a connectionless manner.

According to the sequence of FIG. 6, when the cell area includes the cell 180a and the cell 180b, the communication unit 320 transmits, to the wireless base station 120b, the piece of cell identification information decided by the control unit 300. This allows pieces of cell identification information to be synchronized among a plurality of wireless base stations 120.

The wireless base station 120 may delete, among the stored pieces of cell identification information, a piece of cell identification information assigned to the wireless relay apparatus 110 that has moved out of range of the cell area. Furthermore, when an amount of time equal to or greater than a predetermined amount of time has passed since a piece of cell identification information was stored, the wireless base station 120 may delete said piece of cell identification information.

As described above, the cell area may be an area including a cell of a single wireless base station 120, or may be an area including cells of the plurality of wireless base stations 120. Setting of the cell area is not limited thereto. The cell area may be an area including a cell of a single wireless relay apparatus 110, may be an area including cells of a plurality of wireless relay apparatuses 110, or may be an area including cells of one or more wireless base stations 120 and cells of one or more wireless relay apparatuses 110. When setting a cell area including a cell of at least one wireless relay apparatus 110, the cell area may be able to include a cell of the wireless relay apparatus 110 located within a predetermined number of hops from the wireless base station 120. Alternatively, the cell area may be an area that is arbitrarily set.

According to the wireless communication system 5 described above, a specific piece of cell identification information is assigned to a cell formed by the wireless relay apparatus 110 in a specific cell area including the cell 180 formed by at least one wireless base station 120. This allows the cell formed by the wireless relay apparatus 110 in the specific cell area to be identified through the specific piece of cell identification information. This allows pieces of identification information of cells formed by at least nearby moving bodies to be different from each other, in mobile communication performed by the wireless relay apparatus 110. As such, stability of communication by the wireless relay apparatus 110 can be improved, and thus traffic safety in the moving body 100 can be enhanced.

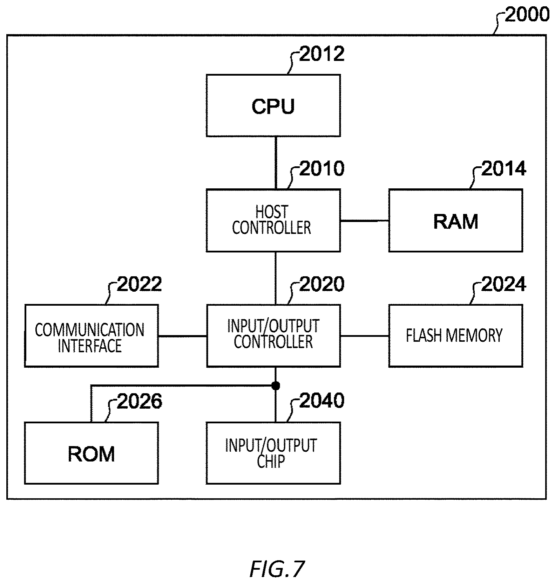

FIG. 7 shows an example of a computer 2000 in which a plurality of embodiments of the present invention can be entirely or partially embodied. A program installed on the computer 2000 can cause the computer 2000 to: function as a system according to the embodiments or each unit of the system or as various kinds of apparatuses, such as a wireless base station and a wireless relay apparatus, or each unit of said apparatuses; execute operations associated with said system or each unit of said system or with said apparatuses or each unit of said apparatuses; and/or execute a process according to the embodiments or steps of said process. Such a program may be executed by a CPU 2012 in order to cause the computer 2000 to execute a specific operation associated with some or all of the processing procedures and the blocks in the block diagrams described in the present specification.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates in accordance with programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer readable storage medium such as a CD-ROM, a DVD-ROM, or a memory card. The RAM 2014, the ROM 2026, or the flash memory 2024 is an example of the computer readable storage medium. The program is installed in the flash memory 2024, the RAM 2014, or the ROM 2026, and executed by the CPU 2012. Information processing described in these programs is read by the computer 2000, and provides cooperation between the programs and the various types of hardware resources described above. An apparatus or a method may be constructed by realizing operations or processing of information in accordance with a use of the computer 2000.

For example, when a communication is executed between the computer 2000 and an external device, the CPU 2012 may execute a communication program loaded on the RAM 2014, and instruct the communication interface 2022 to execute communication processing based on processing described in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information search/replacement, or the like described in the present specification and designated by instruction sequences of the programs, and write back a result into the RAM 2014. In addition, the CPU 2012 may search for information in a file, a database, or the like in the recording medium. For example, when a plurality of entries each having an attribute value of a first attribute associated with an attribute value of a second attribute, is stored in the recording medium, the CPU 2012 may search for an entry having a designated attribute value of the first attribute that matches a condition from said plurality of entries, and read the attribute value of the second attribute stored in said entry, thereby obtaining the attribute value of the second attribute associated with the first attribute that satisfies a predetermined condition.

The programs or software modules described above may be stored in the computer readable storage medium on the computer 2000 or near the computer 2000. A recording medium such as a hard disk or a RAM provided in a server system connected to a dedicated communication network or the Internet can be used as the computer readable storage medium. A program stored in the computer readable storage medium may be provided to the computer 2000 via a network.

The programs installed onto the computer 2000 for causing the computer 2000 to function as the wireless relay apparatus 110 may instruct the CPU 2012 or the like to cause the computer 2000 to function as each unit of the wireless relay apparatus 110. The information processing described in these programs are read by the computer 2000 to cause the computer to function as each unit of the wireless relay apparatus 110, which is specific means realized by the cooperation of software and the various kinds of hardware resources described above. These specific means realize arithmetic operations or processing of information according to the intended use of the computer 2000 in the present embodiment, and the wireless relay apparatus 110 is thereby constructed to be specific for the intended use.

The programs installed onto the computer 2000 for causing the computer 2000 to function as the wireless base station 120 may instruct the CPU 2012 or the like to cause the computer 2000 to function as each unit of the wireless base station 120. The information processing described in these programs are read by the computer 2000 to cause the computer to function as each unit of the wireless base station 120, which is specific means realized by the cooperation of software and the various kinds of hardware resources described above. These specific means realize arithmetic operations or processing of information according to the intended use of the computer 2000 in the present embodiment, and the wireless base station 120 is thereby constructed to be specific for the intended use.

Various embodiments have been described with reference to the block diagrams and the like. In the block diagrams, each block may represent (1) a stage of a process in which an operation is executed, or (2) each unit of the apparatus having a role in executing the operation. A specific step and each unit may be implemented by a dedicated circuit, a programmable circuit supplied with computer readable instructions stored on a computer readable storage medium, and/or a processor supplied with computer readable instructions stored on a computer readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer readable storage medium may include any tangible device capable of storing instructions to be executed by an appropriate device, so that the computer readable storage medium having instructions stored therein constitutes at least a part of a product including instructions which can be executed to provide means for executing processing procedures or operations designated in the block diagrams. Examples of the computer readable storage medium may include an electronic storage medium, a magnetic storage medium, an optical storage medium, an electromagnetic storage medium, a semiconductor storage medium, and the like. More specific examples of the computer readable storage medium may include a FLOPPY (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a BLU-RAY (registered trademark) disk, a memory stick, an integrated circuit card, or the like.

The computer readable instructions may include an assembler instruction, an instruction-set-architecture (ISA) instruction, a machine instruction, a machine-dependent instruction, a microcode, a firmware instruction, state-setting data, or either of source code or object code described in any combination of one or more programming languages including an object-oriented programming language such as Smalltalk (registered trademark), JAVA (registered trademark), and C++, or the like, and a conventional procedural programming language such as a "C" programming language or a similar programming language.

Computer readable instructions may be provided to a processor of a general purpose computer, a special purpose computer, or another programmable data processing apparatus, or to programmable circuit, locally or via a local area network (LAN), wide area network (WAN) such as the Internet or the like, and a computer readable instruction may be executed to provide means for executing operations designated in the described processing procedures or block diagrams. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations or improvements can be made to the above-described embodiments. It is also apparent from description of the claims that the embodiments to which such alterations or improvements are made can be included in the technical scope of the present invention.

It should be noted that the operations, procedures, steps, steps, and the like of each process executed by an apparatus, system, program, and method shown in the claims, embodiments, or diagrams can be realized in any order as long as the order is not indicated by "prior to," "before," or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

5: wireless communication system;
100: moving body;
110: wireless relay apparatus;
120: wireless base station;
140: terminal apparatus;
180: cell;
200: control unit;
210: storage unit;
220: communication unit;
300: control unit;
310: storage unit;
320: communication unit;
2000: computer;
2010: host controller;
2012: CPU;
2014: RAM;
2020: input/output controller;
2022: communication interface;
2024: flash memory;
2026: ROM; and
2040: input/output chip.

## Claims

1. A wireless base station which wirelessly communicates with at least one wireless relay apparatus, the wireless base station comprising:
a storage unit which stores a piece of area identification information for identifying a cell area including a cell formed by at least either: one or more wireless base stations including the wireless base station; or one or more wireless relay apparatuses including the wireless relay apparatus;
a control unit which decides a piece of cell identification information for identifying a cell formed by the wireless relay apparatus in the cell area; and
a communication unit which transmits, to the wireless relay apparatus, the piece of area identification information and the piece of cell identification information that is decided by the control unit.

2. The wireless base station according to claim 1, wherein
the control unit decides the piece of cell identification information such that the piece of cell identification information transmitted to each of a plurality of wireless relay apparatuses that are close to each other in the cell area, does not coincide.

3. The wireless base station according to claim 1, wherein
the control unit decides the piece of cell identification information such that the piece of cell identification information transmitted to each of a plurality of wireless relay apparatuses in the cell area, does not coincide.

4. The wireless base station according to any one of claims 1 to 3, wherein
when the cell area includes cell areas of a plurality of wireless base stations including the wireless base station, the communication unit transmits the piece of cell identification information decided by the control unit to another wireless base station included in the plurality of wireless base stations.

5. The wireless base station according to any one of claims 1 to 3, wherein
the communication unit transmits the piece of area identification information being included in a piece of report information.

6. The wireless base station according to any one of claims 1 to 3, wherein
the communication unit receives, from the wireless relay apparatus, a piece of area identification information transmitted to the wireless relay apparatus, and
when a piece of area identification information received by the communication unit from the wireless relay apparatus is different from a piece of area identification information for identifying the cell area, the control unit decides the piece of cell identification information, and the communication unit transmits the piece of cell identification information to the wireless relay apparatus.

7. The wireless base station according to any one of claims 1 to 3, wherein
the communication unit receives, from the wireless relay apparatus, a piece of cell identification information assignment information indicating whether or not a piece of cell identification information is assigned to the wireless relay apparatus, and
when the control unit determines, based on the piece of cell identification information assignment information, that a piece of cell identification information is not assigned to the wireless relay apparatus, the control unit decides the piece of cell identification information, and the communication unit transmits, to the wireless relay apparatus, the piece of cell identification information decided by the control unit.

8. A wireless communication system comprising:
the wireless base station according to any one of claims 1 to 3; and
the wireless relay apparatus.

9. A program which causes a computer to function as the wireless base station according to any one of claims 1 to 3.

10. A wireless relay apparatus which relays communication between a wireless base station and a terminal apparatus, the wireless relay apparatus comprising:
a communication unit which receives, from the wireless base station, a piece of area identification information for identifying a cell area including a cell formed by at least either: one or more wireless base stations including the wireless base station; or one or more wireless relay apparatuses including the wireless relay apparatus, and a piece of cell identification information for identifying a cell formed by the wireless relay apparatus in the cell area; and
a storage unit which stores the piece of area identification information and the piece of cell identification information that are received by the communication unit, wherein
the communication unit wirelessly communicates with the terminal apparatus by using the piece of cell identification information stored in the storage unit.

11. The wireless relay apparatus according to claim 10, wherein
the communication unit receives the piece of area identification information through a piece of report information.

12. The wireless relay apparatus according to claim 10 or 11, wherein
the communication unit
transmits, to the wireless base station, the piece of area identification information stored in the storage unit, and
when the piece of area identification information stored in the storage unit is different from the piece of area identification information for identifying the cell area, receives the piece of cell identification information from the wireless relay apparatus.

13. The wireless relay apparatus according to claim 10 or 11**,** wherein
the communication unit
transmits, to the wireless base station, a piece of cell identification information assignment information indicating whether or not a piece of cell identification information is stored in the storage unit, and
when a piece of cell identification information is not stored in the storage unit, receives the piece of cell identification information from the wireless base station.

14. A moving body comprising the wireless relay apparatus according to claim 10 or 11.

15. A wireless communication system comprising:
the wireless relay apparatus according to claim 10 or 11; and
the wireless base station.

16. A program which causes a computer to function as the wireless relay apparatus according to claim 10 or 11.

17. A wireless communication method executed in a wireless base station which wirelessly communicates with at least one wireless relay apparatus, the wireless communication method comprising:
storing a piece of area identification information for identifying a cell area including a cell formed by at least either: one or more wireless base stations including the wireless base station; or one or more wireless relay apparatuses including the wireless relay apparatus;
deciding a piece of cell identification information for identifying a cell formed by the wireless relay apparatus in the cell area; and
transmitting, to the wireless relay apparatus, the piece of area identification information and the piece of cell identification information that is decided in the deciding.

18. A wireless communication method executed in a wireless relay apparatus which relays communication between a wireless base station and a terminal apparatus, the wireless communication method comprising:
receiving, from the wireless base station, a piece of area identification information for identifying a cell area including a cell formed by at least either: one or more wireless base stations including the wireless base station; or one or more wireless relay apparatuses including the wireless relay apparatus, and a piece of cell identification information for identifying a cell formed by the wireless relay apparatus in the cell area;
storing the piece of area identification information and the piece of cell identification information that are received from the wireless base station; and
wirelessly communicating with the terminal apparatus by using the piece of cell identification information stored in the storing.
